Europäisches Patentamt

European Patent Office

Office européen des brevets

(19)

(11) Veröffentlichungsnummer : **0 059 976**
**B1**

(12) EUROPÄISCHE PATENTSCHRIFT

(45) Veröffentlichungstag der Patentschrift :
18.06.86

(51) Int. Cl.⁴ : **F 24 H   3/00**, F 24 H   3/02,
F 24 D 11/00, F 28 D   1/02

(21) Anmeldenummer : 82101881.9

(22) Anmeldetag : 09.03.82

(54) **Kompaktheizkörper für Raumzentralheizung.**

(30) Priorität : 10.03.81 DE 3108928

(43) Veröffentlichungstag der Anmeldung :
15.09.82 Patentblatt 82/37

(45) Bekanntmachung des Hinweises auf die Patenterteilung : 18.06.86 Patentblatt 86/25

(84) Benannte Vertragsstaaten :
AT BE CH DE FR GB IT LI LU NL SE

(56) Entgegenhaltungen :
DE-A- 2 422 989
DE-A- 2 502 852
DE-A- 2 738 036
DE-A- 2 800 399
DE-C-   683 141
FR-A-   668 560
FR-A- 1 471 057
FR-A- 2 180 197
FR-A- 2 198 609
US-A- 2 122 168

(73) Patentinhaber : **Giacosa, Valerio**
**Auf der Alm 108**
**D-5760 Arnsberg 2 (DE)**

(72) Erfinder : **Giacosa, Valerio**
**Auf der Alm 108**
**D-5760 Arnsberg 2 (DE)**

(74) Vertreter : **Otto, Dieter, Dr.-Ing. et al**
**Patentanwälte Müller-Boré, Deufel, Schön, Hertel**
**Lewald, Otto Isartorplatz 6 Postfach 26 02 47**
**D-8000 München 26 (DE)**

## Beschreibung

Die Erfindung betrifft einen Kompaktheizkörper für Raumzentralheizungen mit mindestens zwei plattenförmigen Hohlkörpern aus Stahl für das hiezwasser, mit Konvektionselementen zwischen den Hohlkörpern, mit einer elektrischen Widerstandsheizung, und mit einer Verkleidung an den Außenseiten.

Die von einem Heizkörper abgegebene Wärmemenge ist abhängig von der vom Heizwasser erwärmten Oberfläche und von der Vorlauftemperatur des Heizwassers. Die meisten herkömmlichen Zentralheizungen werden mit Heizwasser betrieben, das eine Temperatur von etwa 90° aufweist. Diese Zentralheizungen sind aber unwirtschaftlich, da zum Aufheizen des Heizwassers zuviel Energie notwendig ist. Es wird deshalb angestrebt, Zentralheizungen mit Heizwasser zu betreiben, das eine Temperatur von 60° nicht übersteigt. Das hat aber zur Folge, daß die Oberfläche der Heizkörper, die mit 90° heißem Wasser betrieben werden, nicht mehr ausreicht. Um die gleiche Wärmeleistung zu erreichen, muß die Oberfläche der Heizkörper um etwa 50 % erhöht werden. Diese Erhöhung der Oberfläche bringt wiederum ästhetische und wirtschaftliche Probleme mit sich.

Aus der FR-A-2 198 609 ist ein Heizkörper bestehend aus zwei plattenförmigen Hohlkörpern für das Heizwasser bekannt, wobei an den sich gegenüberliegenden Flächen der Hohlkörper Konvektoren angeordnet sind. Als zusätzliche Heizquelle ist an der Unterseite der Hohlkörper eine elektrische Widerstandsheizung angeordnet. Die Speicherung der durch die Zusatzheizung erzeugten Wärme ist dabei unbefriedigend.

Ein aus der DE-A-2 738 036 bekanntes Heizelement für die Raumheizung besteht aus zwei Hohlkörpern für das Heizwasser, zwischen welchen Wärmespeicherelemente angeordnet sind. Eine Konvektion zwischen den Hohlkörpern ist dort nicht mehr möglich.

Aus der FR-A-2 180 197 ist eine Vorrichtung zur Verbesserung der Konvektion eines Heizkörpers und der Luftfeuchtigkeit bekannt, wobei ein in einem Gehäuse angeordneter Ventilator vor einem Heizkörper angebracht wird.

Der Erfindung liegt die Aufgabe zugrunde, einen Kompaktheizkörper zum Betrieb mit Niedertemperatur-Heizwasser zu schaffen, der bei guter Speicherfähigkeit und Anpassung an die Umgebungsbedingungen schnell regelbar und ansprechend ist.

Die Lösung dieser Aufgabe wird dadurch erreicht, daß an den sich gegenüberliegenden Wänden zweier Hohlkörper Konvektionselemente aus wärmespeicherfähigem Material angeordnet sind, daß die elektrische Widerstandsheizung zwischen den Konvektionselementen über deren ganze Höhe angeordnet ist, und daß an der Unterseite des Heizkörpers zwischen den Hohlkörpern ein horizontal angeordneter Luftkanal zur Zwangsbelüftung der Konvektionselemente vorgesehen ist.

Durch die drei Zusatzelemente Konvektionselemente, elektrische Widerstandsheizung und Luftkanal wird die Leistung eines aus zwei oder drei Hohlkörpern bestehenden Kompaktheizkörpers beträchtlich erhöht. Die Konvektionselemente übernehmen eine Wärmespeicherfunktion, die elektrische Widerstandsheizung gleicht ein Wärmemanko aus und der Luftkanal erbringt eine Zwangsbelüftung in dem Kompaktheizkörper, durch die ein besserer Wärmetransport erfolgt. Bei niedrigen Außentemperaturen kann die elektrische Widerstandsheizung parallel zu der Warmwasserheizung eingeschaltet werden, so daß sie einerseits mehr Wärme in den zu beheizenden Raum einbringt, während sie andererseits den Kessel der Zentralheizung entschieden entlastet. Bei Verwendung von billigerem Nachtstrom kann die elektrische Widerstandsheizung als Nachtspeicherheizung betrieben werden. Während ihrer Einschaltzeit kann sie die Konvektionselemente aufheizen, die dann, wenn Wärme in dem Raum benötigt wird, als Wärmespeicher die Wärmeenergie langsam abgeben. Die elektrische Widerstandsheizung kann in Übergangszeiten allein betrieben werden, so daß der mit einer derartigen Heizung ausgerüstete Kompaktheizkörper als Radiator wirkt. Für die Beheizung der Räume in dieser Zeit kann also noch auf das Einschalten der Zentralheizung verzichtet werden, zusätzliche, elektrische Hiezkörper, wie Radiatoren oder Heizlüfter, brauchen nicht installiert zu werden.

In Ausgestaltung der Erfindung kann vorgesehen sein, daß an dem Luftkanal ein Induktionsmotor vorgesehen ist zum Antreiben eines Ventilators, wobei der Luftkanal aus Kunststoff bestehen kann. Weiterhin kann vorgesehen sein, daß das wärmespeicherfähige Material Schamott ist, und daß die elektrische Widerstandsheizung durch Isoliermaterial von den Konvektionselementen getrennt angeordnet ist. Um einen optimalen und wirtschaftlichen Betrieb der Kompaktheizkörper zu erhalten, kann vorgesehen sein, daß die elektrische Widerstandsheizung und der Ventilator über Thermostaten geregelt werden.

Die Erfindung wird im folgenden anhand eines Ausführungsbeispieles unter Bezugnahme auf die Zeichnung näher erläutert.

Es zeigen :

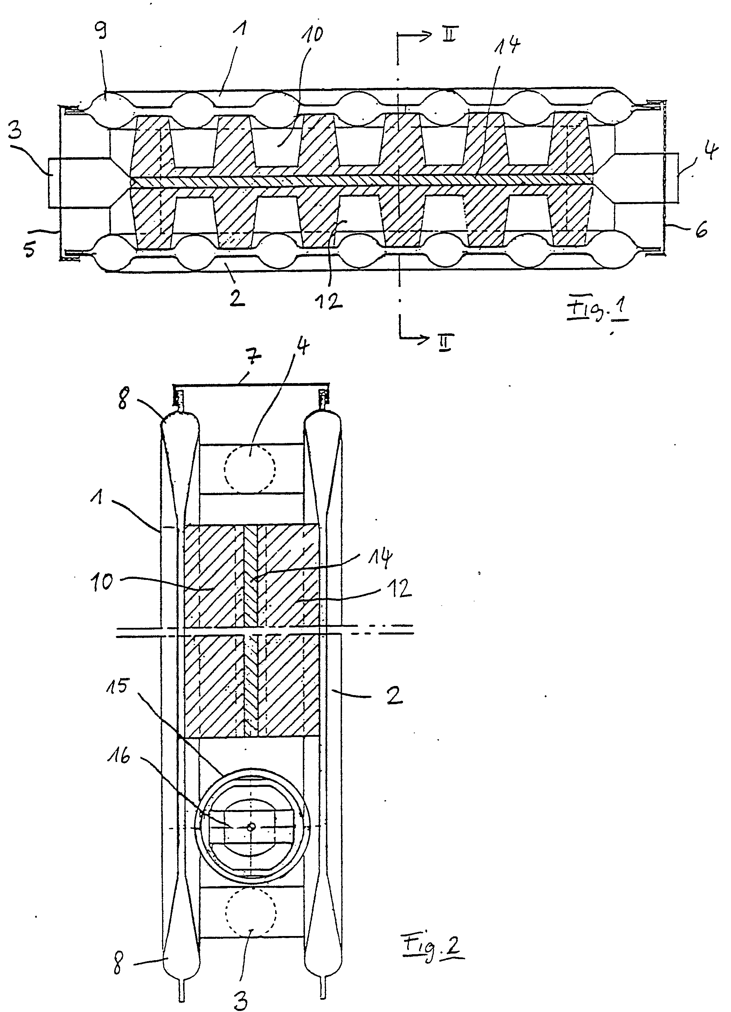

Figur 1 einen Querschnitt durch einen Zweiplattenkompaktheizkörper und

Figur 2 einen Schnitt gemäß der Linien II-II von Fig. 1.

Der Kompaktheizkörper besteht aus zwei Hohlkörpern 1, 2.

Die Hohlkörper 1 und 2 sind über einen Heizwasserzulauf 3 und einen Heizwasserablauf 4 miteinander verbunden. Der Heizwasserzulauf ist zweckmäßigerweise oben zwischen den Hohlkörpern angeordnet, während der Heizwasserablauf unten zwischen den Hohlkörpern vorgesehen ist. An den Schmalseiten und an der Oberseite sind die Hohlkörper mit Verkleidungen 5, 6, 7 versehen, wobei die obere Verkleidung 7 über ihre ganze Länge mit Entlüftungsschlitzen versehen ist. In den Hohlkörpern 1 und 2 sind horizontale Kanäle 8 und vertikale Kanäle 9 für das Heizwasser ausgebildet.

Zwischen den Hohlkörpern 1 und 2 sind innen an dem Hohlkörper 1 Konvektionselementen 10 spaltfrei angesetzt. An der Innenseite des Hohlkörpers 2 sind Konvektionselemente 12 aus Schamott spaltfrei angesetzt. Zwischen den Konvektionselementen 10 und 12 ist eine elektrische Widerstandsheizung 14 vorgesehen, wobei darauf geachtet ist, daß zwischen den Konvektionselementen und der Widerstandsheizung kein isolierender Luftspalt verbleibt. Die elektrische Widerstandsheizung 14 ist über nicht gezeigte Anschlüsse mit einer elektrischen Energiequelle verbunden.

An der Unterseite des Kompaktheizkörpers ist zwischen den Hohlkörpern 1 und 2 ein Luftkanal 15 ausgebildet, der beispielsweise aus einem Kunststoffrohr bestehen kann. In dem Luftkanal 15 ist ein Induktionsmotor 16 angeordnet, der einen Ventilator antreibt. Der Luftkanal 15 ist nach oben hin geöffnet, so daß die von der Seite oder von unten durch den Ventilator eingezogene Luft nach oben durch die Konvektionselemente 10 und 12 geblasen wird.

Die elektrische Widerstandsheizung 14 und der Ventilator 16 können über Thermostate geregelt werden, so daß mit geringem Energieverbrauch immer die gewünschte Raumtemperatur erreicht wird.

**Patentansprüche**

1. Kompaktheizkörper für Raumzentralheizungen mit mindestens zwei plattenförmigen Hohlkörpern (1, 2) aus Stahl für das Heizwasser, mit Konvektionselementen (10, 12) zwischen den Hohlkörpern (1, 2), mit einer elektrischen Widerstandsheizung und mit einer Verkleidung (5, 6, 7) an den Außenseiten, dadurch gekennzeichnet, daß die Konvektionselemente aus wärmespeicherfähigem Material bestehen und an den sich gegenüberliegenden Wänden zweier Hohlkörper (1, 2) angeordnet sind, daß die elektrische Widerstandsheizung (14) zwischen den Konvektionselementen (10, 12) über deren ganze Höhe angeordnet ist, und daß an der Unterseite des Heizkörpers zwischen den Hohlkörpern (1, 2) ein horizontal angeordneter Luftkanal (15) zur Zwangsbelüftung der Konvektionselemente (10, 12) vorgesehen ist.

2. Kompaktheizkörper nach Anspruch 1, dadurch gekennzeichnet, daß an dem Luftkanal (15) ein Induktionsmotor (16) vorgesehen ist zum Antrieben eines Ventilators.

3. Kompaktheizkörper nach Anspruch 1 oder 2, dadurch gekennzeichnet, daß der Luftkanal (15) aus Kunststoff besteht.

4. Kompaktheizkörper nach einem der Ansprüche 1 bis 3, dadurch gekennzeichnet, daß das wärmespeicherfähige Material für die Konvektionselemente (10, 12) Schamott ist.

5. Kompaktheizkörper nach einem der Ansprüche 1 bis 4, dadurch gekennzeichnet, daß die elektrische Widerstandsheizung (14) durch Isoliermaterial von den Konvektionselementen (10, 12) getrennt ist.

6. Kompaktheizkörper nach einem der Ansprüche 1 bis 5, dadurch gekennzeichnet, daß die elektrische Widerstandsheizung (14) und der Ventilator über Thermostaten geregelt werden.

**Claims**

1. A compact heater body for room central heating with at least two plate-shaped hollow bodies (1, 2) of steel for the hot water, with convection elements (10, 12) between the hollow bodies (1, 2), with an electrical resistance heater and with external cladding (5, 6, 7), characterized in that the convection elements are made of material capable of storing heat and are mounted on the opposite walls of two hollow bodies (1, 2), that the electrical resistance heater (14) is mounted between the convection elements (10, 12) and extends over the full height thereof, and that at the underside of the heater body between the hollow bodies (1, 2) a horizontal air conduit (15) is provided for forced ventilation of the convection elements (10, 12).

2. A compact heater body in accordance with claim 1, characterized in that an induction motor (16) is mounted on the air conduit (15) to drive a fan.

3. A compact heater body in accordance with claim 1 or 2, characterized in that the air conduit (15) is of plastics material.

4. A compact heater body in accordance with one of claims 1 to 3, characterized in that the material capable of storing heat in the convection elements (10, 12) is fireclay.

5. A compact heater body in accordance with one of claims 1 to 4, characterized in that the electrical resistance heater (14) is separated from the convection elements (10, 12) by insulating material.

6. A compact heater body in accordance with one of claims 1 to 5, characterized in that the electrical resistance heater (14) and the fan are controlled by thermostats.

**Revendications**

1. Radiateur compact pour chauffage central comportant au moins deux corps creux (1, 2) en forme de plaques en acier pour l'eau de chauffage, des éléments de convection (10, 12) entre les corps creux (1, 2) un chauffage électrique par résistance et un revêtement (5, 6, 7) sur les côtés extérieurs, caractérisé en ce que les éléments de convection sont faits en matériau capable d'accumuler la chaleur et sont disposés sur les parois opposées de deux corps creux (1, 2), que le chauffage électrique par résistance (14) est disposé entre les éléments de convection (10, 12) sur toute leur hauteur et qu'il est prévu sur le côté inférieur du radiateur, entre les corps creux (1, 2) un canal d'air (15) disposé horizontalement destiné à la ventilation forcée des éléments de convection (10, 12).

2. Radiateur compact selon la revendication 1, caractérisé en ce qu'il est prévu sur le canal d'air (15) un moteur à induction (16) pour entraîner un ventilateur.

3. Radiateur compact selon la revendication 1 ou 2, caractérisé en ce que le canal d'air (15) est fait en matière plastique.

4. Radiateur compact selon une quelconque des revendications 1 à 3, caractérisé en ce que le matériau capable d'accumuler la chaleur pour les éléments de convection (10, 12) est la chamotte.

5. Radiateur compact selon une quelconque des revendications 1 à 4, caractérisé en ce que le chauffage électrique par résistance (14) est séparé des éléments de convection (10, 12) par un matériau isolant.

6. Radiateur compact selon une quelconque des revendications 1 à 5, caractérisé en ce que le chauffage électrique par résistance (14) et le ventilateur sont régulés par des thermostats.

Fig. 1

Fig. 2